# EUROPEAN PATENT SPECIFICATION

(11) **EP 2 597 561 B1**
(45) Date of publication and mention of the grant of the patent: **30.12.2020**
(21) Application number: 12192529.1
(22) Date of filing: 14.11.2012
(51) Int. Cl.: G06F 3/0488, G06F 3/02

(54) **Apparatus and method for arranging a keypad in wireless terminal**
Vorrichtung und Verfahren zur Anordnung einer Tastatur in drahtlosem Endgerät
Appareil et procédé permettant de disposer un clavier dans un terminal sans fil

(30) Priority: 25.11.2011 KR 20110123964
(43) Date of publication of application: 29.05.2013
(60) Divisional application: 20189421.9 / 3 751 406
(73) Proprietor: Samsung Electronics Co., Ltd., Gyeonggi-do 443-742 (KR)
(72) Inventor: Goo, Ja-Min, 443-742 Gyeonggi-do (KR)
(74) Representative: Hylarides, Paul Jacques

(56) References cited:
- US-A1- 2009 058 815
- US-A1- 2010 277 414
- US-A1- 2011 141 027

## Description

### BACKGROUND OF THE INVENTION

### 1. Field of the Invention

The present invention relates generally to an apparatus and method for arranging a keypad in a wireless terminal, and more particularly, to an apparatus and method for arranging a keypad in a wireless terminal to conveniently perform a key input in the wireless terminal.

### 2.Description of the Related Art

When an input mode is performed in a vertical mode (in which a wireless terminal is placed in a vertical direction), a keypad is displayed on the bottom of a screen of a display unit, and a key input in the input mode is performed on the displayed keypad.

Even when the input mode is performed in a horizontal mode (in which the wireless terminal is placed in a horizontal direction), a keypad is displayed on the bottom of the screen of the display unit, and a key input in the input mode is performed on the displayed keypad.

In the vertical mode of the wireless terminal, because the wireless terminal is placed in the vertical direction, a significant amount of screen area is available above the displayed keypad in order to display input contents together with the displayed keypad.

However, in the horizontal mode of the wireless terminal, because the wireless terminal is placed in the horizontal direction, the keypad in the horizontal mode occupies a relatively larger portion of the screen than when the keypad is in the vertical mode. Therefore, all of input contents may not be displayed on the screen. Additionally, it is inconvenient to use keys arranged in the center of the keypad in the horizontal mode.

From US 2011/0141027 A1, US 2009/0058815 A1 and US 2010/0277414 A1 it is known to arrange a keypad on a touch screen of a wireless terminal, wherein groups of keys of the keypad are displayed in at least one of a right and left side on the touch screen.

### SUMMARY OF THE INVENTION

The present invention provides an apparatus and method for arranging a keypad in a wireless terminal so as to allow a user to conveniently perform a key input in the wireless terminal.

In accordance with one aspect of the present invention, an apparatus and method is provided for arranging a keypad in a wireless terminal to conveniently perform a key input while the wireless terminal is in a horizontal mode of operation.

In accordance with another aspect of the present invention, an apparatus and method is provided for arranging a keypad in a wireless terminal so as to allow display of all of input contents on a screen of a display unit in a horizontal mode of the wireless terminal.

The present invention is defined by an apparatus and a method according to the independent claims. Preferred embodiments are defined in the dependent claims.

When, in accordance with the invention, the keypad of the wireless terminal in the horizontal mode is displayed in at least one of the right and left side on the screen, a user may conveniently perform a key input, while at the same time a vertical area of the screen that is adjacent to the displayed keypad has no keypad display thereon. Thus, the full vertical area of the adjacent portion of the screen is available to display input contents thereon.

### BRIEF DESCRIPTION OF THE DRAWINGS

The above and other features and advantages of the present invention will become more apparent from the following detailed description when taken in conjunction with the accompanying drawing in which:
FIG. 1 is a block diagram illustrating a wireless terminal according to an embodiment of the present invention;
FIG. 2 is a flowchart illustrating a process of arranging a keypad in the wireless terminal, according to an embodiment of the present invention; and
FIGs. 3A to 3D illustrate keypads of the wireless terminal, according to an embodiment of the present invention.

### DETAILED DESCRIPTION OF THE INVENTION

Preferred embodiments of the present invention will be described herein below with reference to the accompanying drawings. Like reference numbers are used to refer to like elements throughout the specification and the drawings. Detailed descriptions of functions and structures incorporated herein that are well known by those of ordinary skill in the art may be omitted for clarity and simplicity so as to not obscure appreciation of the present invention.

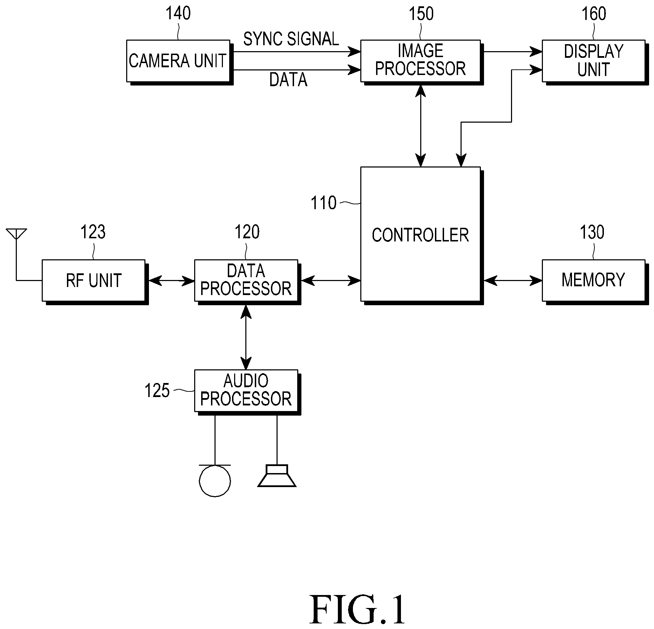

Referring to FIG. 1, a Radio Frequency (RF) unit 123 performs a wireless communication function of the wireless terminal. The RF unit 123 includes an RF transmitter for up-converting a frequency of a transmission signal and amplifying the up-converted transmission signal and an RF receiver for low-noise amplifying a received signal and down-converting a frequency of the amplified received signal. A data processor 120 includes a transmitter for coding and modulating the transmission signal and a receiver for demodulating and decoding the received signal. In other words, the data processor 120 may include a modem and a codec. The codec includes a data codec for processing packet data and the like, and an audio codec for processing an audio signal such as voice. An audio processor 125 plays a received audio signal output from the audio codec in the data processor 120 and transfers a transmission audio signal picked up by a microphone to the audio codec in the data processor 120.

A memory 130 may include a program memory and a data memory. The program memory may store programs for controlling a general operation of the wireless terminal. In addition, the program memory may store programs for controlling a display unit 160 to display a keypad in a right and/or left side on a screen in a horizontal mode of the wireless terminal. The data memory may temporarily store data generated while the programs are executed. In addition, when the horizontal mode of operation of the wireless terminal ends, according to an embodiment of the present invention (that is, when the display unit 160 is oriented in the horizontal direction), the memory 130 may store the keypad in the right and/or left side on the screen in the horizontal mode.

A controller 110 controls the overall operation of the wireless terminal.

According to an embodiment of the present invention, during the horizontal mode of the wireless terminal, the controller 110 controls the display unit 160 to display a keypad in the right and/or left side on the screen of the display unit 160.

In addition, when it is determined that the wireless terminal switches to an input mode in the horizontal mode, the controller 110 may control the display unit 160 to display a keypad in the right and/or left side on the screen of the display unit 160.

In addition, when the wireless terminal switches to the horizontal mode, the controller 110 may control the display unit 160 to display a keypad arranged in the right and/or left side on the screen of the display unit 160 in accordance with a previous horizontal mode.

When, as noted above, the wireless terminal is in the horizontal mode (that is, the screen is oriented in the horizontal direction) and the keypad is displayed in a right and/or left side on the screen, a user may conveniently perform a key input, while at the same time a vertical area of the screen that is adjacent to the displayed keypad has no keypad display thereon. Thus, the full vertical area of the adjacent portion of the screen is available to display input contents thereon.

In addition, in accordance with another aspect of the invention, a user is able to control details of how a keypad is arranged in the right and/or left side on the screen of the display unit 160, as described below.

More specifically, the controller 110 may control the display unit 160 to display a keypad divided and arranged on a row basis in the right and/or left side on the screen of the display unit 160 by moving row-based keys in accordance with a dragged direction through a hold-and-drag operation performed by a user of the wireless terminal.

In addition, when the hold-and-drag operation occurs for predetermined row-based keys of a keypad arranged in the left side on the screen of the display unit 160 in the horizontal mode of the wireless terminal, the controller 110 may control the display unit 160 to display the predetermined held row-based keys in the right side on the screen of the display unit 160 by moving the predetermined held row-based keys to the right (the dragged direction). In this case, the controller 110 may control the display unit 160 to display the predetermined held row-based keys in the right side on the screen of the display unit 160 when the drag operation in the right direction passes over the center line on the screen.

In addition, when the hold-and-drag operation occurs for predetermined row-based keys of a keypad arranged in the left side on the screen of the display unit 160 in the horizontal mode of the wireless terminal, the controller 110 may control the display unit 160 to display the predetermined held row-based keys at a changed position of the keypad arranged in the left side on the screen of the display unit 160 by moving the predetermined held row-based keys to the left (the dragged direction).

In addition, when the hold-and-drag operation occurs for predetermined row-based keys of a keypad arranged in the right side on the screen of the display unit 160 in the horizontal mode of the wireless terminal, the controller 110 may control the display unit 160 to display the predetermined held row-based keys in the left side on the screen of the display unit 160 by moving the predetermined held row-based keys to the left (the dragged direction). In this case, the controller 110 may control the display unit 160 to display the predetermined held row-based keys in the left side on the screen of the display unit 160 when the drag operation in the left direction passes over the center line on the screen.

In addition, when the hold-and-drag operation occurs for predetermined row-based keys of a keypad arranged in the right side on the screen of the display unit 160 in the horizontal mode of the wireless terminal, the controller 110 may control the display unit 160 to display the predetermined held row-based keys at a changed position of the keypad arranged in the right side on the screen of the display unit 160 by moving the predetermined held row-based keys to the right (the dragged direction).

A camera unit 140 includes a camera sensor for optically capturing image data and converting the optically captured image data into an electrical image signal, and a signal processor for converting the electrical image signal into digital data. The camera sensor is assumed herein to be a Charge-Coupled Device (CCD) or Complementary Metal Oxide Semiconductor (CMOS) sensor, and the signal processor may be realized by a Digital Signal Processor (DSP). The camera sensor and the signal processor may be realized in an integrated manner or in a separated manner.

An image processor 150 performs Image Signal Processing (ISP) for displaying image signals output from the camera unit 140 on the display unit 160, and the ISP performs functions such as gamma correction, interpolation, spatial variation, image effects, image scaling, Automatic White Balance (AWB), Automatic Exposure (AE), and Automatic Focusing (AF). The image processor 150 processes the image signals output from the camera unit 140 on a frame basis, and outputs the frame-based image data according to the characteristics and size of the display unit 160. The image processor 150, which includes a video codec, compresses frame image data displayed on the display unit 160 by preset coding, and restores (or decompresses) the compressed frame image data into its original frame image data. The video codec may include a JPEG codec, MPEG4 codec, Wavelet codec, etc. Assuming that the image processor 150 includes an On-Screen Display (OSD) function, the controller 110 may control the image processor 150 to output OSD data according to the size of a screen on which the data is displayed.

The display unit 160 displays an image output from the image processor 150 and user data output from the controller 110 on a screen. The display unit 160 may function as an input unit by being realized as a touch screen. In this case, the display unit 160 functioning as the input unit may display a keypad including the alphanumeric keys for inputting alphanumeric information and function keys for setting various functions.

In addition, according to an embodiment of the present invention, the display unit 160 may display a keypad in the right and/or left side on a screen in the horizontal mode of the wireless terminal, and the keypad may be divided on a row basis. In this case, keys arranged in row-based keypads of the keypad may be displayed the same as keys arranged in row-based keypads of a keypad displayed in a vertical mode of the wireless terminal.

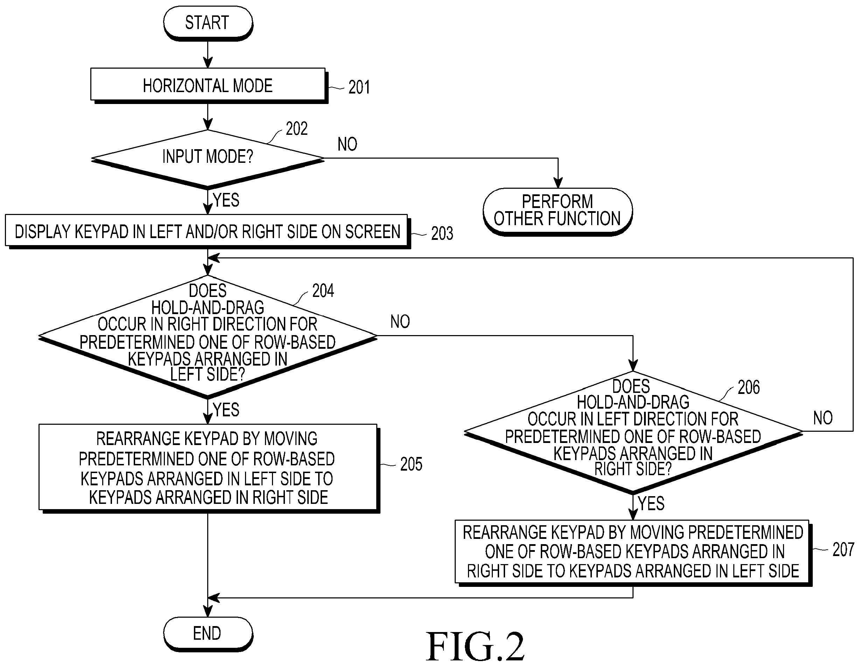

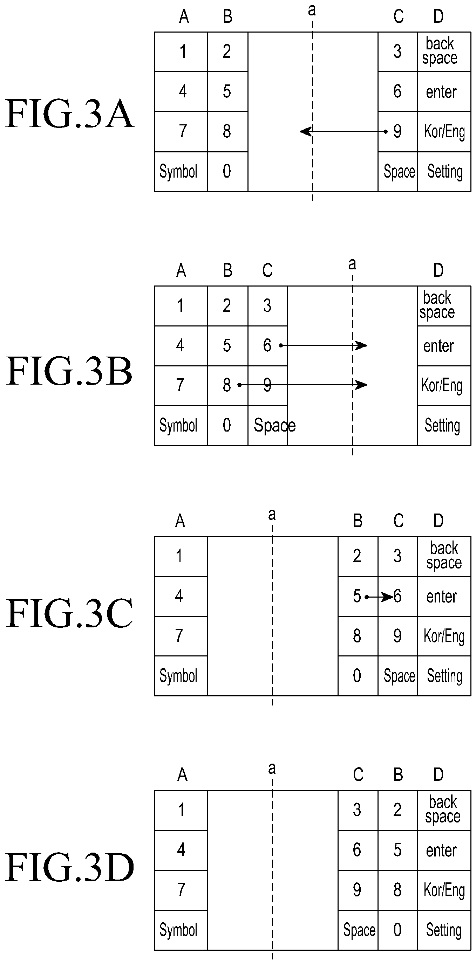

FIG. 2 is a flowchart illustrating a process of arranging a keypad in a wireless terminal, according to an embodiment of the present invention, and FIGs. 3A to 3D illustrate keypads of the wireless terminal according to an embodiment of the present invention.

Referring to FIG. 2 (and with reference to FIG. 1 for details of the apparatus), in step 201, i.e., in the horizontal mode, in which the wireless terminal is placed in the horizontal direction, if the wireless terminal switches to the input mode for performing an input operation, the controller 110 detects this in step 202 and proceeds to step 203 to display a keypad in the left and/or right side on the screen of the display unit 160.

Alternatively, when it is determined in the input mode of the wireless terminal that the wireless terminal has been switched to the horizontal mode, the controller 110 may control the display unit 160 to display a keypad in the left and/or right side on the screen of the display unit 160 in step 203.

Alternatively, in step 203, the controller 110 may control the display unit 160 to display a keypad set as default or a keypad arranged in the left and/or right side on the screen of the display unit 160 in accordance with a previous horizontal mode.

Thus, when the wireless terminal switches to the horizontal mode, the controller 110 may control the display unit 160 to display a keypad in each of the left and right sides on the screen of the display unit 160, in only the left side on the screen of the display unit 160, or in only the right side on the screen of the display unit 160.

The keypad displayed in the left and/or right side on the screen of the display unit 160 may be divided on a row basis, and keys arranged in row-based keypads of the keypad may be displayed the same as keys arranged in row-based keypads of a keypad displayed in the vertical mode of the wireless terminal.

While the keypad is displayed in the left and/or right side on the screen of the display unit 160 in step 203, if a hold-and-drag operation occurs in the right direction for a predetermined one of row-based keypads arranged in the left side on the screen, the controller 110 detects this in step 204 and proceeds to step 205 to rearrange the keypad by moving the predetermined held row-based keypad to row-based keypads arranged in the right side on the screen of the display unit 160.

In this case, if the drag operation ends after the predetermined held row-based keypad passes over the center of the screen, the controller 110 controls the display unit 160 to rearrange the keypad by moving the predetermined held row-based keypad to the leftmost position of the row-based keypads arranged in the right side on the screen of the display unit 160.

If the drag operation ends when the predetermined held row-based keypad is placed at a predetermined one of the row-based keypads arranged in the right side on the screen, the controller 110 controls the display unit 160 to rearrange the keypad by moving the predetermined held row-based keypad to a position prior or next to the predetermined one of the row-based keypads arranged in the right side on the screen at which the drag operation ended.

Otherwise, while the keypad is displayed in the left and/or right side on the screen of the display unit 160 in step 203, if a hold-and-drag operation occurs in the left direction for a predetermined one of the row-based keypads arranged in the left side on the screen, the controller 110 detects this and controls the display unit 160 to rearrange the keypad by moving the predetermined held row-based keypad to the left so that a position of the predetermined held row-based keypad is changed in the row-based keypads arranged in the left side on the screen of the display unit 160.

In this case, if the drag operation ends when the predetermined held row-based keypad is placed at a predetermined one of the row-based keypads arranged in the left side on the screen, the controller 110 controls the display unit 160 to rearrange the keypad by moving the predetermined held row-based keypad to a position prior or next to the predetermined one of the row-based keypads arranged in the left side on the screen at which the drag operation ended.

Otherwise, while the keypad is displayed in the left and/or right side on the screen of the display unit 160 in step 203, if a hold-and-drag operation occurs in the left direction for a predetermined one of the row-based keypads arranged in the right side on the screen, the controller 110 detects this in step 206 and proceeds to step 207 to rearrange the keypad by moving the predetermined held row-based keypad to the row-based keypads arranged in the left side on the screen of the display unit 160.

In this case, if the drag operation ends after the predetermined held row-based keypad passes over the center of the screen, the controller 110 controls the display unit 160 to rearrange the keypad by moving the predetermined held row-based keypad to the rightmost position of the row-based keypads arranged in the left side on the screen of the display unit 160.

If the drag operation ends when the predetermined held row-based keypad is placed at a predetermined one of the row-based keypads arranged in the left side on the screen, the controller 110 controls the display unit 160 to rearrange the keypad by moving the predetermined held row-based keypad to a position prior or next to the predetermined one of the row-based keypads arranged in the left side on the screen at which the drag operation ends.

Otherwise, while the keypad is displayed in the left and/or right side on the screen of the display unit 160 in step 203, if a hold-and-drag operation occurs in the right direction for a predetermined one of the row-based keypads arranged in the right side on the screen, the controller 110 detects this and controls the display unit 160 to rearrange the keypad by moving the predetermined held row-based keypad to the right so that a position of the predetermined held row-based keypad is changed in the row-based keypads arranged in the right side on the screen of the display unit 160.

In this case, if the drag operation ends when the predetermined held row-based keypad is placed at a predetermined one of the row-based keypads arranged in the right side on the screen, the controller 110 controls the display unit 160 to rearrange the keypad by moving the predetermined held row-based keypad to a position prior or next to the predetermined one of the row-based keypads arranged in the right side on the screen at which the drag operation ends.

FIG. 3A illustrates row-based keypads A and B arranged in the left side on the screen of the display unit 160 and row-based keypads C and D arranged in the right side on the screen in the horizontal mode of the wireless terminal.

In FIG. 3A, when a hold-and-drag operation occurs in the left direction for a predetermined one (C) of the row-based keypads C and D arranged in the right side on the screen, if the drag operation in the left direction ends right after the predetermined held row-based keypad C passes over the center line a of the screen, the predetermined held one (C) of the row-based keypads C and D arranged in the right side on the screen is moved and rearranged to the rightmost position of the row-based keypads A and B arranged in the left side on the screen as shown in FIG. 3B.

In FIG. 3B, when a hold-and-drag operation occurs in the right direction for a predetermined one (C) of the row-based keypads A, B, and C arranged in the left side on the screen, if the drag operation in the right direction ends right after the predetermined held row-based keypad C passes over the center line a of the screen, and thereafter, when another hold-and-drag operation occurs in the right direction for a predetermined one (B) of the row-based keypads A and B arranged in the left side on the screen, if the drag operation in the right direction ends right after the predetermined held row-based keypad B passes over the center line a of the screen, the predetermined held ones (C and B) of the row-based keypads A, B, and C arranged in the left side on the screen are moved and rearranged in the moved order to the leftmost position of the row-based keypad D arranged in the right side on the screen as shown in FIG. 3C.

In FIG. 3C, when a hold-and-drag operation occurs in the right direction for a predetermined one (B) of the row-based keypads B, C, and D arranged in the right side on the screen, if the drag operation ends when the predetermined held row-based keypad B is placed at a predetermined one (C) of the row-based keypads B, C, and D arranged in the right side on the screen, the predetermined held one (B) of the row-based keypads B, C, and D arranged in the right side on the screen is moved and rearranged to a position next to the predetermined one (C) at which the drag operation ends.

As described above, when an input operation is performed by using a keypad arranged in the left and/or right side on a screen of a display unit in the horizontal mode of a wireless terminal, all of input contents may be perceived on a central vertical portion of the screen that has no keypad display thereon, which portion of the screen has about the same height as the display portion of the screen in the vertical mode of the wireless terminal when a keypad is displayed at the bottom of the screen.

In addition, although only movement of row-based keypads of a keypad has been described in the embodiments of the present invention, movement of column-based keypads of the keypad may also be likely performed through a hold-and-drag operation.

In addition, although only row-based movement of a keypad has been described in the embodiments of the present invention, an individual character/number assigned to each key of the keypad may also be moved and rearranged to a desired key position of the keypad through a hold-and-drag operation.

As is apparent from the foregoing description, the proposed apparatus and method for arranging a keypad in a wireless terminal, in which a keypad is displayed in a right and/or left side on a screen of a display unit in the horizontal mode of the wireless terminal, allows a user to conveniently perform a key input in the horizontal mode of the wireless terminal, while at the same time leaving a vertical area of the screen that is adjacent to the displayed keypad, which vertical area has no keypad display thereon, so that the full vertical area of the screen is available to display input contents thereon.

While the invention has been shown and described with reference to certain exemplary embodiments, such as a wireless terminal, thereof, it will be understood by those skilled in the art that various changes in form and details may be made therein without departing from the scope of the invention as defined by the appended claims.

## Claims

1. A wireless terminal comprising:
a touch screen display (160);
a processor (110, 150) configured to control the touch screen display to display in an input state a keypad while the wireless terminal is in a vertical input mode or a horizontal input mode, the keypad being a touch keypad including a plurality of keys; and
a memory (130) coupled to the processor and having stored therein plural configuration states of the keypad,
wherein the processor is further configured to:
display the keypad in a contiguous configuration state of the horizontal input mode in which the plurality of keys of the keypad are displayed on the touch screen display contiguously while the wireless terminal is in the horizontal input mode,
in response to receiving a user input while the keypad is displayed in the contiguous configuration state of the horizontal input mode and the wireless terminal is in the horizontal input mode, change the display of the plurality of keys of the keypad from the contiguous configuration state of the horizontal input mode to a split configuration state of the horizontal input mode in which the keypad is split and the plurality of keys on the keypad are displayed on the touch screen display as two groups of keys including a left side group of keys and a right side group of keys with no keys displayed in an area between the left side group of keys and the right side group of keys and with at least one of the plurality of keys being movable from a right side to a left side or from the left side to the right side, and store the split configuration state of the horizontal input mode as a latest configuration state of the horizontal input mode,
when the wireless terminal is changed from the horizontal input mode with the keypad in the split configuration of the horizontal input mode to the vertical input mode, change the display of the plurality of keys from the split configuration state of the horizontal input mode to a contiguous configuration state of the vertical input mode, and
when the wireless terminal is changed from the vertical input mode with the keypad in the contiguous configuration state of the vertical input mode to the horizontal input mode, change the display of the plurality of keys from the contiguous configuration state of the vertical input mode to the split configuration state of the horizontal input mode that is stored as the latest configuration state of the horizontal input mode.

2. The wireless terminal as claimed in claim 1, wherein in the horizontal input mode the processor is further configured to move at least one of the plurality of keys from the right side to the left side or from the left side to the right side if a touch operation occurs.

3. The wireless terminal as claimed in claim 1 or 2, wherein the processor is configured to move at least one group of keys of the plurality of keys in a dragged direction through a hold-and-drag operation.

4. The wireless terminal as claimed in any of the preceding claims, wherein a group of keys comprises a plurality of keys and wherein the processor is configured to apply a row-based movement of the group of keys, a column-based movement of the group of keys and/or a key-based movement.

5. The wireless terminal of claim 1, wherein if it is determined during a horizontal mode of operation that the wireless terminal switches to the horizontal input mode, the processor is configured to control the touch screen display to display a keypad in the at least one of the right and left side on the touch screen display.

6. The wireless terminal of claim 1, wherein in the horizontal input mode, the processor is configured to control the touch screen display to display a keypad arranged in the at least one of the right and left side on the touch screen display in accordance with a previous horizontal mode.

7. The wireless terminal of claim 1, wherein the processor is configured to control the touch screen display to display a plurality of groups of keys divided and arranged on a row basis in the at least one of the right and left side on the touch screen display by moving row-based groups of keys in a dragged direction through a hold-and-drag operation,
wherein if a hold-and-drag operation occurs in the right direction for a predetermined one of row-based groups of keys arranged in the left side, the processor is preferably configured to control the touch screen display to display the predetermined held row-based group of keys in the right side by moving the predetermined held row-based group of keys in the dragged right direction, and/or
if a hold-and-drag operation occurs in the left direction for a predetermined one of row-based groups of keys arranged in the right side, the processor is preferably configured to control the touch screen display to display the predetermined held row-based group of keys in the left side on the touch screen display by moving the predetermined held row-based group of keys in the dragged left direction.

8. The wireless terminal of claim 6, wherein if a hold-and-drag operation occurs in the left direction for a predetermined one of row-based groups of keys arranged in the left side, the processor is configured to control the touch screen display to display the predetermined held row-based group of keys at a changed position of the row-based group of keys arranged in the left side by moving the predetermined held row-based group of keys in the dragged left direction; and/or
if a hold-and-drag operation occurs in the right direction for a predetermined one of row-based groups of keys arranged in the right side, the processor is configured to control the touch screen display to display the predetermined held row-based group of keys at a changed position of the row-based groups of keys arranged in the right side by moving the predetermined held row-based group of keys in the dragged right direction.

9. The wireless terminal of claim 1, wherein the processor is configured to control the touch screen display to display a group of keys in both of the right and left sides on the touch screen display, while providing the area of the touch screen display that is adjacent to at least one of the right side and the left side on the touch screen display.

10. A method of arranging a keypad in a wireless terminal, the method comprising:
displaying (203), on a touch screen display (160), a keypad in an input state while the wireless terminal is in a vertical input mode or a horizontal input mode, wherein the keypad is a touch keypad including a plurality of keys;
displaying the keypad in a contiguous configuration state of the horizontal input mode in which the plurality of keys of the keypad are displayed on the touch screen display contiguously while the wireless terminal is in the horizontal input mode;
in response to receiving a user input while the keypad is being displayed in the contiguous configuration state of the horizontal input mode and the wireless terminal is in the horizontal input mode, changing the display of the plurality of keys of the keypad from the contiguous configuration state of the horizontal input mode to a split configuration state of the horizontal input mode in which the keypad is split and the plurality of keys on the keypad are displayed on the touch screen display as two groups of keys including a left side group of keys and a right side group of keys with no keys displayed in an area between the left side group of keys and the right side group of keys and with at least one of the plurality of keys being movable from a right side to a left side or from the left side to the right side, and storing the split configuration state of the horizontal input mode as a latest configuration state of the horizontal input mode; and
when the wireless terminal is changed from the horizontal input mode with the keypad in the split configuration of the horizontal input mode to the vertical input mode, changing the display of the plurality of keys from the split configuration state of the horizontal input mode to a contiguous configuration state of the vertical input mode, and
when the wireless terminal is changed from the vertical input mode with the keypad in the contiguous configuration state of the vertical input mode to the horizontal input mode, changing the display of the plurality of keys from the contiguous configuration state of the vertical input mode to the split configuration state of the horizontal input mode that is stored as the latest configuration state of the horizontal input mode.

11. The method of claim 10, wherein the displaying comprises displaying (203) a keypad in the at least one of the right and left side on the touch screen display and/or displaying a keypad arranged in the at least one of the right and left side on the touch screen display in accordance with a previous horizontal mode.

12. The method of claim 10, comprising displaying a keypad divided and arranged on a row basis in the at least one of the right and left side on the touch screen display by moving row-based groups of keys in a dragged direction through a hold-and-drag operation.

13. The method of claim 12, wherein the displaying of the keypad by moving row-based groups of keys in a dragged direction comprises:
if a hold-and-drag operation occurs for a predetermined one of row-based groups of keys arranged in the left side, determining the dragged direction;
if it is determined (204) that the dragged direction is the right direction, displaying (205) the predetermined held row-based group of keys in the right side on the touch screen display by moving the predetermined held row-based group of keys in the right direction; and
if it is determined that the dragged direction is the left direction, displaying the predetermined held row-based group of keys at a changed position of the row-based groups of keys arranged in the left side by moving the predetermined held row-based group of keys in the left direction; and/or
wherein the displaying of the keypad by moving row-based groups of keys in a dragged direction comprises:
if a hold-and-drag operation occurs for a predetermined one of row-based groups of keys arranged in the right side, determining the dragged direction;
if it is determined (206) that the dragged direction is the left direction, displaying (207) the predetermined held row-based group of keys in the left side on the touch screen display by moving the predetermined held row-based group of keys in the left direction; and
if it is determined that the dragged direction is the right direction, displaying the predetermined held row-based group of keys at a changed position of the row-based groups of keys arranged in the right side by moving the predetermined held row-based group of keys in the right direction.

14. The method of claim 10, wherein the displaying of the keypad comprises displaying a group of keys in both of the right side and the left side on the touch screen display while providing the area that is adjacent to at least one of the right and the left side on the touch screen display.

## Patentansprüche

1. Drahtloses Endgerät, das Folgendes umfasst:
eine Berührungsbildschirmanzeige (160);
einen Prozessor (110, 150), der dazu konfiguriert ist, die Berührungsbildschirmanzeige derart zu steuern, dass sie in einem Eingabezustand ein Tastenfeld anzeigt, während das drahtlose Endgerät sich in einem vertikalen Eingabemodus oder einem horizontalen Eingabemodus befindet, wobei es sich bei dem Tastenfeld um ein Berührungstastenfeld mit einer Vielzahl von Tasten handelt; und
einen Speicher (130), der mit dem Prozessor gekoppelt ist und in dem mehrere Konfigurationszustände des Tastenfeldes gespeichert sind,
wobei der Prozessor weiterhin zu Folgendem konfiguriert ist:
Anzeigen des Tastenfeldes in einem zusammenhängenden Konfigurationszustand des horizontalen Eingabemodus, in dem die Vielzahl von Tasten des Tastenfeldes zusammenhängend auf der Berührungsbildschirmanzeige angezeigt wird, während das drahtlose Endgerät sich im horizontalen Eingabemodus befindet,
als Reaktion auf den Empfang einer Benutzereingabe, während das Tastenfeld im zusammenhängenden Konfigurationszustand des horizontalen Eingabemodus angezeigt wird und das drahtlose Endgerät sich im horizontalen Eingabemodus befindet, Ändern der Anzeige der Vielzahl von Tasten des Tastenfeldes aus dem zusammenhängenden Konfigurationszustand des horizontalen Eingabemodus in einen geteilten Konfigurationszustand des horizontalen Eingabemodus, in dem das Tastenfeld geteilt ist und die Vielzahl von Tasten auf dem Tastenfeld auf der Berührungsbildschirmanzeige in zwei Gruppen von Tasten angezeigt werden mit einer Gruppe von Tasten auf einer linken Seite und einer Gruppe von Tasten auf einer rechten Seite, wobei in einem Bereich zwischen der Gruppe von Tasten auf der linken Seite und der Gruppe von Tasten auf der rechten Seite keine Tasten angezeigt werden, und wobei wenigstens eine aus der Vielzahl von Tasten von einer rechten Seite zu einer linken Seite oder von einer linken Seite zu einer rechten Seite bewegt werden kann, und Speichern des geteilten Konfigurationszustands des horizontalen Eingabemodus als einen letzten Konfigurationszustand des horizontalen Eingabemodus,
wenn das drahtlose Endgerät aus dem horizontalen Eingabemodus mit dem Tastenfeld in der geteilten Konfiguration des horizontalen Eingabemodus in den vertikalen Eingabemodus geändert wird, Ändern der Anzeige der Vielzahl von Tasten aus dem geteilten Konfigurationszustand des horizontalen Eingabemodus in einen zusammenhängenden Konfigurationszustand des vertikalen Eingabemodus, und
wenn das drahtlose Endgerät aus dem vertikalen Eingabemodus mit dem Tastenfeld im zusammenhängenden Konfigurationszustand des vertikalen Eingabemodus in den horizontalen Eingabemodus geändert wird, Ändern der Anzeige der Vielzahl von Tasten aus dem zusammenhängenden Konfigurationszustand des vertikalen Eingabemodus in den geteilten Konfigurationszustand des horizontalen Eingabemodus, der als letzter Konfigurationszustand des horizontalen Eingabemodus gespeichert ist.

2. Drahtloses Endgerät nach Anspruch 1, wobei der Prozessor im horizontalen Eingabemodus weiterhin dazu konfiguriert ist, wenigstens eine aus der Vielzahl von Tasten von der rechten Seite zu der linken Seite oder von der linken Seite zu der rechten Seite zu bewegen, wenn ein Berührungsvorgang erfolgt.

3. Drahtloses Endgerät nach Anspruch 1 oder 2, wobei der Prozessor dazu konfiguriert ist, wenigstens eine Gruppe von Tasten aus der Vielzahl von Tasten durch einen Halten-und-Ziehen-Vorgang in einer Ziehrichtung zu bewegen.

4. Drahtloses Endgerät nach einem der vorhergehenden Ansprüche, wobei eine Gruppe von Tasten eine Vielzahl von Tasten umfasst und wobei der Prozessor dazu konfiguriert ist, eine zeilenbasierte Bewegung der Gruppe von Tasten, eine spaltenbasierte Bewegung der Gruppe von Tasten und/oder eine tastenbasierte Bewegung anzuwenden.

5. Drahtloses Endgerät nach Anspruch 1, wobei, wenn während eines horizontalen Betriebsmodus bestimmt wird, dass das drahtlose Endgerät in den horizontalen Eingabemodus wechselt, der Prozessor dazu konfiguriert ist, die Berührungsbildschirmanzeige derart zu steuern, dass ein Tastenfeld auf der rechten und/oder der linken Seite der Berührungsbildschirmanzeige angezeigt wird.

6. Drahtloses Endgerät nach Anspruch 1, wobei der Prozessor im horizontalen Eingabemodus dazu konfiguriert ist, die Berührungsbildschirmanzeige derart zu steuern, dass ein Tastenfeld, das auf der rechten und/oder der linken Seite der Berührungsbildschirmanzeige ausgerichtet ist, in Übereinstimmung mit einem vorherigen horizontalen Modus angezeigt wird.

7. Drahtloses Endgerät nach Anspruch 1, wobei der Prozessor dazu konfiguriert ist, die Berührungsbildschirmanzeige derart zu steuern, dass eine Vielzahl von Tastengruppen, die durch Bewegen von zeilenbasierten Tastengruppen in einer Ziehrichtung durch eine Halten-und-Ziehen-Vorgang auf Zeilenbasis auf der rechten und/oder der linken Seite der Berührungsbildschirmanzeige aufgeteilt und ausgerichtet sind, angezeigt werden,
wobei, wenn ein Halten-und-Ziehen-Vorgang in der Richtung nach rechts für eine vorbestimmte Gruppe von auf der linken Seite ausgerichteten Gruppen von zeilenbasierten Tastengruppen erfolgt, der Prozessor vorzugsweise dazu konfiguriert ist, die Berührungsbildschirmanzeige derart zu steuern, dass die vorbestimmte gehaltene zeilenbasierte Tastengruppe auf der rechten Seite angezeigt wird, indem die vorbestimmte gehaltene zeilenbasierte Tastengruppe in der nach rechts gezogenen Richtung angezeigt wird, und/oder
wenn ein Halten-und-Ziehen-Vorgang in der Richtung nach links für eine vorbestimmte Gruppe von auf der rechten Seite ausgerichteten Gruppen von zeilenbasierten Tastengruppen erfolgt, der Prozessor vorzugsweise dazu konfiguriert ist, die Berührungsbildschirmanzeige derart zu steuern, dass die vorbestimmte gehaltene zeilenbasierte Tastengruppe auf der linke Seite auf dem Berührungsbildschirm angezeigt wird, indem die vorbestimmte gehaltene zeilenbasierte Tastengruppe in der nach links gezogenen Richtung angezeigt wird.

8. Drahtloses Endgerät nach Anspruch 6, wobei, wenn ein Halten-und-Ziehen-Vorgang in der Richtung nach links für eine vorbestimmte Gruppe von auf der linken Seite ausgerichteten Gruppen von zeilenbasierten Tastengruppen erfolgt, der Prozessor dazu konfiguriert ist, die Berührungsbildschirmanzeige derart zu steuern, dass die vorbestimmte gehaltene zeilenbasierte Tastengruppe an einer geänderten, auf der linken Seite ausgerichteten Position der zeilenbasierten Tastengruppe angezeigt wird, indem die vorbestimmte gehaltene zeilenbasierte Tastengruppe in der nach links gezogenen Richtung angezeigt wird; und/oder
wenn ein Halten-und-Ziehen-Vorgang in der Richtung nach rechts für eine vorbestimmte Gruppe von auf der rechten Seite ausgerichteten Gruppen von zeilenbasierten Tastengruppen erfolgt, der Prozessor dazu konfiguriert ist, die Berührungsbildschirmanzeige derart zu steuern, dass die vorbestimmte gehaltene zeilenbasierte Tastengruppe an einer geänderten, auf der rechten Seite ausgerichteten Position der zeilenbasierten Tastengruppe angezeigt wird, indem die vorbestimmte gehaltene zeilenbasierte Tastengruppe in der nach rechts gezogenen Richtung angezeigt wird.

9. Drahtloses Endgerät nach Anspruch 1, wobei der Prozessor dazu konfiguriert ist, die Berührungsbildschirmanzeige derart zu steuern, dass eine Tastengruppe sowohl auf der rechten Seite als auch auf der linken Seite auf der Berührungsbildschirmanzeige angezeigt wird, während der Bereich der Berührungsbildschirmanzeige, der an wenigstens eine aus der rechten Seite und der linken Seite auf dem Berührungsbildschirmanzeige angrenzt, bereitgestellt wird.

10. Verfahren zum Ausrichten eines Tastenfeldes in einem drahtlosen Endgerät, wobei das Verfahren Folgendes umfasst:
auf einer Berührungsbildschirmanzeige (160), Anzeigen (203) eines Tastenfeldes in einem Eingabezustand, während das drahtlose Endgerät sich in einem vertikalen Eingabemodus oder einem horizontalen Eingabemodus befindet, wobei es sich bei dem Tastenfeld um ein Berührungstastenfeld mit einer Vielzahl von Tasten handelt;
Anzeigen des Tastenfeldes in einem zusammenhängenden Konfigurationszustand des horizontalen Eingabemodus, in dem die Vielzahl von Tasten des Tastenfeldes zusammenhängend auf der Anzeige angezeigt wird, während das drahtlose Endgerät sich im horizontalen Eingabemodus befindet,
als Reaktion auf den Empfang einer Benutzereingabe, während das Tastenfeld im zusammenhängenden Konfigurationszustand des horizontalen Eingabemodus angezeigt wird und das drahtlose Endgerät sich im horizontalen Eingabemodus befindet, Ändern der Anzeige der Vielzahl von Tasten des Tastenfeldes aus dem zusammenhängenden Konfigurationszustand des horizontalen Eingabemodus in einen geteilten Konfigurationszustand des horizontalen Eingabemodus, in dem das Tastenfeld geteilt ist und die Vielzahl von Tasten auf dem Tastenfeld auf der Berührungsbildschirmanzeige in zwei Gruppen von Tasten angezeigt werden mit einer Gruppe von Tasten auf einer linken Seite und einer Gruppe von Tasten auf einer rechten Seite, wobei in einem Bereich zwischen der Gruppe von Tasten auf der linken Seite und der Gruppe von Tasten auf der rechten Seite keine Tasten angezeigt werden, und wobei wenigstens eine aus der Vielzahl von Tasten von einer rechten Seite zu einer linken Seite oder von einer linken Seite zu einer rechten Seite bewegt werden kann, und Speichern des geteilten Konfigurationszustands des horizontalen Eingabemodus als einen letzten Konfigurationszustand des horizontalen Eingabemodus; und
wenn das drahtlose Endgerät aus dem horizontalen Eingabemodus mit dem Tastenfeld in der geteilten Konfiguration des horizontalen Eingabemodus in den vertikalen Eingabemodus geändert wird, Ändern der Anzeige der Vielzahl von Tasten aus dem geteilten Konfigurationszustand des horizontalen Eingabemodus in einen zusammenhängenden Konfigurationszustand des vertikalen Eingabemodus, und
wenn das drahtlose Endgerät aus dem vertikalen Eingabemodus mit dem Tastenfeld im zusammenhängenden Konfigurationszustand des vertikalen Eingabemodus in den horizontalen Eingabemodus geändert wird, Ändern der Anzeige der Vielzahl von Tasten aus dem zusammenhängenden Konfigurationszustand des vertikalen Eingabemodus in den geteilten Konfigurationszustand des horizontalen Eingabemodus, der als letzter Konfigurationszustand des horizontalen Eingabemodus gespeichert ist.

11. Verfahren nach Anspruch 10, wobei das Anzeigen Folgendes umfasst: Anzeigen (203) eines Tastenfeldes auf der rechten und/oder der linken Seite auf der Berührungsbildschirmanzeige, und/oder Anzeigen eines auf der rechten und/oder der linken Seite der Berührungsbildschirmanzeige ausgerichtetes Tastenfeldes in Übereinstimmung mit einem vorherigen horizontalen Modus.

12. Verfahren nach Anspruch 10, das Folgendes umfasst: Anzeigen eines aufgeteilten Tastenfeldes, das auf Zeilenbasis auf der rechten und/oder der linken Seite auf der Berührungsbildschirmanzeige ausgerichtet ist, durch Bewegen von zeilenbasierten Tastengruppen in einer Ziehrichtung eines Halten-und-Ziehen-Vorgangs.

13. Verfahren nach Anspruch 12, wobei das Anzeigen des Tastenfeldes durch Bewegen von zeilenbasierten Tastengruppen in einer Ziehrichtung Folgendes umfasst:
wenn ein Halten-und-Ziehen-Vorgang für eine vorbestimmte Gruppe von auf der linken Seite ausgerichteten Gruppen von zeilenbasierten Tastengruppen erfolgt, Bestimmen der Ziehrichtung;
wenn bestimmt wird (204), dass es sich bei der Ziehrichtung um die Richtung nach rechts handelt, Anzeigen (205) der vorbestimmten gehaltenen zeilenbasierten Tastengruppe auf der linke Seite auf dem Berührungsbildschirm, indem die vorbestimmte gehaltene zeilenbasierte Tastengruppe in die Richtung nach rechts bewegt wird; und
wenn bestimmt wird, dass es sich bei der Ziehrichtung um die Richtung nach links handelt, Anzeigen der vorbestimmten gehaltenen zeilenbasierten Tastengruppe an einer geänderten Position der auf der linken Seite ausgerichteten zeilenbasierten Tastengruppen, indem die vorbestimmte gehaltene zeilenbasierte Tastengruppe in die Richtung nach links bewegt wird; und/oder wobei das Anzeigen des Tastenfeldes durch Bewegen von zeilenbasierten Tastengruppen in einer Ziehrichtung Folgendes umfasst:
wenn ein Halten-und-Ziehen-Vorgang für eine auf der rechten Seite ausgerichtete vorbestimmte Gruppe von zeilenbasierten Tastengruppen erfolgt, Bestimmen der Ziehrichtung;
wenn bestimmt wird (206), dass es sich bei der Ziehrichtung um die Richtung nach links handelt, Anzeigen (207) der vorbestimmten gehaltenen zeilenbasierten Tastengruppe auf der linken Seite auf dem Berührungsbildschirm, indem die vorbestimmte gehaltene zeilenbasierte Tastengruppe in die Richtung nach links bewegt wird; und
wenn bestimmt wird, dass es sich bei der Ziehrichtung um die Richtung nach rechts handelt, Anzeigen der vorbestimmten gehaltenen zeilenbasierten Tastengruppe an einer geänderten Position der auf der rechten Seite ausgerichteten zeilenbasierten Tastengruppen, indem die vorbestimmte gehaltene zeilenbasierte Tastengruppe in die Richtung nach rechts bewegt wird.

14. Verfahren nach Anspruch 10, wobei das Anzeigen des Tastenfeldes Folgendes umfasst:
Anzeigen einer Gruppe von Tasten sowohl auf der rechten Seite als auch auf der linken Seite auf der Berührungsbildschirmanzeige, während der Bereich, der an wenigstens eine aus der rechten Seite und der linken Seite auf dem Berührungsbildschirmanzeige angrenzt, bereitgestellt wird.

## Revendications

1. Terminal sans fil comprenant :
un dispositif d'affichage à écran tactile (160),
un processeur (110, 150) conçu pour commander le dispositif d'affichage à écran tactile afin qu'il affiche, dans un état d'entrée, un clavier alors que le terminal sans fil se trouve dans un mode d'entrée vertical ou un mode d'entrée horizontal, le clavier étant un clavier tactile comportant une pluralité de touches, et
une mémoire (130) couplée au processeur et dans laquelle sont enregistrés plusieurs états de configuration du clavier ;
dans lequel le processeur est conçu en outre pour :
afficher le clavier dans un état de configuration contiguë du mode d'entrée horizontal dans lequel la pluralité de touches du clavier sont affichées sur le dispositif d'affichage à écran tactile de façon contiguë alors que le terminal sans fil se trouve dans le mode d'entrée horizontal,
en réaction à la réception d'une entrée utilisateur alors que le clavier est affiché dans l'état de configuration contiguë du mode d'entrée horizontal et que le terminal sans fil se trouve dans le mode d'entrée horizontal, faire passer l'affichage de la pluralité de touches du clavier de l'état de configuration contiguë du mode d'entrée horizontal à un état de configuration séparée du mode d'entrée horizontal dans lequel le clavier est séparé et la pluralité de touches du clavier sont affichées sur le dispositif d'affichage à écran tactile sous la forme de deux groupes de touches comportant un groupe de touches côté gauche et un groupe de touches côté droit sans affichage de touches dans une zone située entre le groupe de touches côté gauche et le groupe de touches côté droit, au moins une touche de la pluralité de touches étant déplaçable du côté droit vers le côté gauche ou du côté gauche vers le côté droit, et enregistrer l'état de configuration séparée du mode d'entrée horizontal en tant que dernier état de configuration du mode d'entrée horizontal,
lorsque le terminal sans fil passe du mode d'entrée horizontal, avec le clavier en configuration séparée du mode d'entrée horizontal, au mode d'entrée vertical, faire passer l'affichage de la pluralité de touches de l'état de configuration séparée du mode d'entrée horizontal à un état de configuration contiguë du mode d'entrée vertical, et
lorsque le terminal sans fil passe du mode d'entrée vertical, avec le clavier à l'état de configuration contiguë du mode d'entrée vertical, au mode d'entrée horizontal, faire passer l'affichage de la pluralité de touches de l'état de configuration contiguë du mode d'entrée vertical à l'état de configuration séparée du mode d'entrée horizontal qui est enregistré en tant que dernier état de configuration du mode d'entrée horizontal.

2. Terminal sans fil selon la revendication 1, dans lequel, dans le mode d'entrée horizontal, le processeur est conçu en outre pour déplacer au moins une touche de la pluralité de touches du côté droit vers le côté gauche ou du côté gauche vers le côté droit s'il se produit une opération tactile.

3. Terminal sans fil selon la revendication 1 ou 2, dans lequel le processeur est conçu pour déplacer au moins un groupe de touches de la pluralité de touches dans une direction de glisser par le biais d'une opération de toucher-glisser.

4. Terminal sans fil selon l'une quelconque des revendications précédentes, dans lequel un groupe de touches comprend une pluralité de touches et dans lequel le processeur est conçu pour appliquer un déplacement par rangée du groupe de touches, un déplacement par colonne du groupe de touches et/ou un déplacement par touche individuelle.

5. Terminal sans fil selon la revendication 1, dans lequel, s'il est déterminé, pendant un mode horizontal de fonctionnement, que le terminal sans fil passe au mode d'entrée horizontal, le processeur est conçu pour commander le dispositif d'affichage à écran tactile afin qu'il affiche un clavier sur le côté droit et/ou gauche du dispositif d'affichage à écran tactile.

6. Terminal sans fil selon la revendication 1, dans lequel, dans le mode d'entrée horizontal, le processeur est conçu pour commander le dispositif d'affichage à écran tactile afin qu'il affiche un clavier agencé sur le côté droit et/ou gauche du dispositif d'affichage à écran tactile conformément à un mode horizontal précédent.

7. Terminal sans fil selon la revendication 1, dans lequel le processeur est conçu pour commander le dispositif d'affichage à écran tactile afin qu'il affiche une pluralité de groupes de touches divisés et agencés en rangées sur le côté droit et/ou gauche du dispositif d'affichage à écran tactile par déplacement de groupes de touches en rangée dans une direction de glisser par le biais d'une opération de toucher-glisser,
dans lequel, si une opération de toucher-glisser se produit vers la droite pour un groupe prédéterminé parmi les groupes de touches en rangée agencés sur le côté gauche, le processeur est de préférence conçu pour commander le dispositif d'affichage à écran tactile afin qu'il affiche le groupe de touches en rangée prédéterminé touché sur le côté droit en déplaçant le groupe de touches en rangée prédéterminé touché dans la direction du glisser vers la droite, et/ou
si une opération de toucher-glisser se produit vers la gauche pour un groupe prédéterminé parmi les groupes de touches en rangée agencés sur le côté droit, le processeur est de préférence conçu pour commander le dispositif d'affichage à écran tactile afin qu'il affiche le groupe de touches en rangée prédéterminé touché sur le côté gauche du dispositif d'affichage à écran tactile en déplaçant le groupe de touches en rangée prédéterminé touché dans la direction du glisser vers la gauche.

8. Terminal sans fil selon la revendication 6, dans lequel, si une opération de toucher-glisser se produit vers la gauche pour un groupe prédéterminé parmi les groupes de touches en rangée agencés sur le côté gauche, le processeur est conçu pour commander le dispositif d'affichage à écran tactile afin qu'il affiche le groupe de touches en rangée prédéterminé touché en un emplacement modifié du groupe de touches en rangée agencé sur le côté gauche en déplaçant le groupe de touches en rangée prédéterminé touché dans la direction du glisser vers la gauche ; et/ou si une opération de toucher-glisser se produit vers la droite pour un groupe prédéterminé parmi les groupes de touches en rangée agencés sur le côté droit, le processeur est conçu pour commander le dispositif d'affichage à écran tactile afin qu'il affiche le groupe de touches en rangée prédéterminé touché en un emplacement modifié des groupes de touches en rangées agencés sur le côté droit en déplaçant le groupe de touches en rangée prédéterminé touché dans la direction du glisser vers la droite.

9. Terminal sans fil selon la revendication 1, dans lequel le processeur est conçu pour commander le dispositif d'affichage à écran tactile afin qu'il affiche un groupe de touches sur le côté droit et sur le côté gauche du dispositif d'affichage à écran tactile, tout en fournissant la zone du dispositif d'affichage à écran tactile qui est adjacente au côté droit et/ou au côté gauche du dispositif d'affichage à écran tactile.

10. Procédé de disposition d'un clavier dans un terminal sans fil, le procédé comprenant :
l'affichage (203), sur un dispositif d'affichage à écran tactile (160), d'un clavier dans un état d'entrée alors que terminal sans fil se trouve dans un mode d'entrée vertical ou un mode d'entrée horizontal, ledit clavier étant un clavier tactile comportant une pluralité de touches ;
l'affichage du clavier dans un état de configuration contiguë du mode d'entrée horizontal dans lequel la pluralité de touches du clavier sont affichées sur le dispositif d'affichage à écran tactile de façon contiguë alors que le terminal sans fil se trouve dans le mode d'entrée horizontal ;
en réaction à la réception d'une entrée utilisateur alors que clavier est affiché dans l'état de configuration contiguë du mode d'entrée horizontal et que le terminal sans fil se trouve dans le mode d'entrée horizontal, le passage de l'affichage de la pluralité de touches du clavier de l'état de configuration contiguë du mode d'entrée horizontal à un état de configuration séparée du mode d'entrée horizontal dans lequel le clavier est séparé et la pluralité de touches du clavier sont affichées sur le dispositif d'affichage à écran tactile sous la forme de deux groupes de touches comportant un groupe de touches côté gauche et un groupe de touches côté droit sans affichage de touches dans une zone située entre le groupe de touches côté gauche et le groupe de touches côté droit, au moins une touche de la pluralité de touches étant déplaçable du côté droit vers le côté gauche ou du côté gauche vers le côté droit, et l'enregistrement de l'état de configuration séparée du mode d'entrée horizontal en tant que dernier état de configuration du mode d'entrée horizontal ; et
lorsque le terminal sans fil passe du mode d'entrée horizontal, avec le clavier en configuration séparée du mode d'entrée horizontal, au mode d'entrée vertical, le passage de l'affichage de la pluralité de touches de l'état de configuration séparée du mode d'entrée horizontal à un état de configuration contiguë du mode d'entrée vertical, et
lorsque le terminal sans fil passe du mode d'entrée vertical, avec le clavier à l'état de configuration contiguë du mode d'entrée vertical, au mode d'entrée horizontal, le passage de l'affichage de la pluralité de touches de l'état de configuration contiguë du mode d'entrée vertical à l'état de configuration séparée du mode d'entrée horizontal qui est enregistré en tant que dernier état de configuration du mode d'entrée horizontal.

11. Procédé selon la revendication 10, dans lequel l'affichage comprend l'affichage (203) d'un clavier sur le côté droit et/ou gauche du dispositif d'affichage à écran tactile et/ou l'affichage d'un clavier agencé sur le côté droit et/ou gauche du dispositif d'affichage à écran tactile conformément à un mode horizontal précédent.

12. Procédé selon la revendication 10, comprenant l'affichage d'un clavier divisé et agencé en rangées sur le côté droit et/ou gauche du dispositif d'affichage à écran tactile, par déplacement de groupes de touches en rangée dans une direction de glisser par le biais d'une opération de toucher-glisser.

13. Procédé selon la revendication 12, dans lequel l'affichage du clavier par déplacement de groupes de touches en rangée dans une direction de glisser comprend :
si une opération de toucher-glisser se produit pour un groupe prédéterminé parmi les groupes de touches en rangée agencés sur le côté gauche, la détermination de la direction du glisser ;
s'il a été déterminé (204) que la direction du glisser est la droite, l'affichage (205) du groupe de touches en rangée prédéterminé touché sur le côté droit du dispositif d'affichage à écran tactile par déplacement du groupe de touches en rangée prédéterminé touché vers la droite ; et
s'il a été déterminé que la direction du glisser est la gauche, l'affichage du groupe de touches en rangée prédéterminé touché en un emplacement modifié des groupes de touches en rangée agencés sur le côté gauche par déplacement du groupe de touches en rangée prédéterminé touché vers la gauche ; et/ou
dans lequel l'affichage du clavier par déplacement de groupes de touches en rangée dans une direction de glisser comprend :
si une opération de toucher-glisser se produit pour un groupe prédéterminé parmi les groupes de touches en rangée agencés sur le côté droit, la détermination de la direction du glisser ;
s'il a été déterminé (206) que la direction du glisser est la gauche, l'affichage (207) du groupe de touches en rangée prédéterminé touché sur le côté gauche du dispositif d'affichage à écran tactile par déplacement du groupe de touches en rangée prédéterminé touché vers la gauche ; et
s'il a été déterminé que la direction du glisser est la droite, l'affichage du groupe de touches en rangée prédéterminé touché en un emplacement modifié des groupes de touches en rangée agencés sur le côté droit par déplacement du groupe de touches en rangée prédéterminé touché vers la droite.

14. Procédé selon la revendication 10, dans lequel l'affichage du clavier comprend l'affichage d'un groupe de touches sur le côté droit et sur le côté gauche du dispositif d'affichage à écran tactile tout en fournissant la zone qui est adjacente au côté droit et/ou au côté gauche du dispositif d'affichage à écran tactile.
